# EUROPEAN PATENT SPECIFICATION

(11) **EP 4 089 615 B1**
(45) Date of publication and mention of the grant of the patent: **26.08.2026**
(21) Application number: 22178821.9
(22) Date of filing: 15.07.2016
(51) Int. Cl.: G06Q 30/0601, G06T 19/00

(54) **METHOD AND APPARATUS FOR GENERATING AN ARTIFICIAL PICTURE**
VERFAHREN UND VORRICHTUNG ZUR ERZEUGUNG EINES KÜNSTLICHEN BILDES
PROCÉDÉ ET APPAREIL DE GÉNÉRATION D'UNE IMAGE ARTIFICIELLE

(30) Priority: 22.07.2015 DE 102015213832
(43) Date of publication of application: 16.11.2022
(62) Document number(s) of the earlier application(s) in accordance with Art. 76 EPC: 16179602.4 / 3 121 793
(73) Proprietor: adidas AG, 91074 Herzogenaurach (DE)
(72) Inventor: SUESSMUTH, Jochen Björn, 91074 Herzogenaurach (DE); MÖLLER, Bernd, 90409 Nürnberg (DE)
(74) Representative: Bardehle Pagenberg Partnerschaft mbB Patentanwälte Rechtsanwälte

(56) References cited:
- US-A1- 2015 055 085
- LENSCH H P A ET AL: "A SILHOUETTE-BASED ALGORITHM FOR TEXTURE REGISTRATION AND STITCHING", GRAPHICAL MODELS, ELSEVIER, SAN DIEGO, CA, US, vol. 63, no. 4, July 2001 (2001-07-01), pages 245 - 262, XP001085520, ISSN: 1524-0703, DOI: 10.1006/GMOD.2001.0554
- PAUL DEBEVEC: "Rendering synthetic objects into real scenes", 20080811; 1077952576 - 1077952576, 11 August 2008 (2008-08-11), pages 1 - 10, XP058345126, DOI: 10.1145/1401132.1401175

## Description

### Field of the Invention

The present invention relates to a method and apparatus for generating an artificial picture of a person wearing a selectable piece of apparel.

### Prior Art

On-model-product-photography is currently considered as the de-facto standard in the apparel industry for the presentation of apparel products, like T-shirts, trousers, caps etc. To this end, photos of human models are taken wearing said apparel products during a photo shooting session. The photos allow customers to immediately recognize the look, the function and the fit of the apparel product just from a single photo. Such photos are well-known from fashion catalogues, fashion magazines and the like.

Unfortunately, performing photo shootings is considerably time-consuming and expensive. The models, a photographer, a lighting technician, a make-up artist, and a hairdresser and so on all must meet in the same photo studio at the same time. Only a limited number of photos can be taken during a photo shooting session, which in turn allows only a limited number of apparels to be photographed during a photo shooting session.

Moreover, when a photo shooting session continues over several days, it is almost impossible to have the same environmental conditions, like illumination and the like, on every day of the session. Thus, the impression of the resulting photos might slightly vary, depending on the environmental conditions of the day when the individual photo was shot.

Therefore, computer-aided solutions have been developed to replace the above described photo shooting sessions.

Document US 2015 / 0 055 085 A1 discloses systems and methods for creating fully custom products from scratch without exclusive use of off-the-shelf or prespecified components. A system for creating custom products includes an image capture device for capturing image data and/or measurement data of a user. A computer is communicatively coupled with the image capture device and configured to construct an anatomic model of the user based on the captured image data and/or measurement data. The computer provides a configurable product model and enables preview and automatic or user-guided customization of the product model. A display is communicatively coupled with the computer and displays the custom product model superimposed on the anatomic model or image data of the user. The computer is further configured to provide the customized product model to a manufacturer for manufacturing eyewear for the user in accordance with the customized product model. The manufacturing system is configured to interpret the product model and prepare instructions and control equipment for the manufacturing of the customized product.

Document US 2011/0298897 A1 discloses a method and apparatus for 3D virtual try-on of apparel on an avatar. A method of online fitting a garment on a person's body may comprise receiving specifications of a garment, receiving body specifications of one or more fit models, receiving one or more grade rules, receiving one or more fabric specifications, and receiving specifications of a consumer's body.

Document US 2014/0176565 A1 discloses methods for generating and sharing a virtual body model of a person, created with a small number of measurements and a single photograph, combined with one or more images of garments.

Document US 2010/0030578 A1 discloses methods and systems that relate to online methods of collaboration in community environments. The methods and systems are related to an online apparel modeling system that allows users to have three-dimensional models of their physical profile created. Users may purchase various goods and/or services and collaborate with other users in the online environment.

Document WO 01/75750 A1 discloses a system for electronic shopping of wear articles including a plurality of vendor stations having a virtual display of wear articles to be sold. First data representing a three dimensional image and at least one material property for each wear article is provided. The system also includes at least one buyer station with access to the vendor stations for selecting one or more of the wear articles and for downloading its associated first data. A virtual three-dimensional model of a person is stored at the buyer station and includes second data representative of three dimensions of the person.

A further computer-aided technique is proposed in the publication of Divivier et al.: "Topics in Realistic, Individualized Dressing in Virtual Reality", Bundesmin-isteriumfür Bildung und Forschung (BMBF): Virtual and Augmented Reality Status Conference 2004, Proceedings CD-ROM, Leipzig, 2004*.*

However, none of the above mentioned approaches has been successful to fully replace conventional photo sessions.

Therefore, the underlying object of the present invention is to provide an improved method and a corresponding apparatus for generating an artificial picture of a person wearing a selectable piece of apparel.

Further prior art is disclosed in US 2007 / 0 130 020 A1, in US 2015 / 0 130 795 A1, in US 2010 / 0 306 082 A1, in Rogge, L. et al.: "Garment Replacement in Monocular Video Sequences", ACM Translations on Graphics, Vol. 34, 2014, Article No. 6, pages 6:1 - 6:10, in Zhou, W. et al.: "A Unified Framework For Scene Illuminant Estimation", online available under URL http://citeseer.ist.psu.edu/viewdoc/summary?doi=10.1.1.106.1267&rank=1, retrieved online on June 9, 2016, and in "Indigo Renderer", Tutorial, 41 pages, available online under URL http://web.archive.org/web/20090815000000*/http://www.indigorenderer.com/dist /Indigo%20Manual.pdf, retrieved on June 10, 2016.

### Summary

The above mentioned problem is at least partly solved by a method according to claim 1, an apparatus according to claim 12, and by a computer program according to claim 14.

According to one aspect of the invention, a method for generating an artificial picture of a person wearing a selectable piece of apparel is provided, the method comprising the steps of (a) providing a 3D person model of at least a part of the person, wherein the 3D person model comprises textures based on one or more photos of the person, (b) providing a photo of the person corresponding to the 3D person model, (c) providing illumination condition data relating to the photo based on data gathered by an ambient sensor at essentially the same point in time when the photo of the person is taken, (d) selecting the piece of apparel, and (e) generating the artificial picture as a combination of the photo and a rendered 3D apparel model of the selected piece of apparel, wherein rendering the 3D apparel model considers the illumination condition data and the 3D person model, wherein considering the illumination condition data comprises applying the illumination condition data to the 3D apparel model and to the 3D person model.

Applicant has found out that artificial pictures of an apparel-wearing person may be generated with an improved quality by rendering a 3D apparel model and combining that rendering with a photo of said human person.

However, to achieve an at least partly realistic picture, a 3D model of the person may be provided, in order to use its parameters like height, abdominal girth, shoulder width and the like, for later rendering the 3D apparel model.

Moreover, the present invention uses a photo of the person that replaces the 3D person model in the final artificial image.

The illumination of the picture may be a further factor affecting its quality. Thus, providing illumination condition data may allow the integration of the illumination condition data into the artificial picture to further improve its quality.

By way of example, assuming that the person would have been illuminated from the upper left side while the photo has been taken, and assuming that the 3D apparel model would have been illuminated from the upper right side while rendering, this would prevent a seamless integration of the rendered 3D apparel model into the photo. The reason for this is that illumination conditions may be important when combining separately created images. If the illumination conditions of the photo and the rendered 3D apparel model significantly deviate, the shadowing and reflections on the rendered 3D apparel model and on the photo of the person also deviate from each other and therefore, may appear in an unnatural way in the artificial picture. As a result, a human viewer might be able to easily identify the generated picture as an artificial one.

Furthermore, the above described parameters with regard to the 3D person model may be used to adjust the shape of the 3D apparel model. Therefore, the rendered 3D apparel model may look like if it is worn by the person. Exact fitting of the 3D apparel model with respect to the person of the photo may further increase the quality of the generated artificial picture.

The above described results may be achieved without any tedious adjustment of a 3D scene and without any time-consuming post-production steps. In addition, even more improved results with regard to the quality of the artificial picture may be achieved by the present invention by avoiding rendering the 3D person model for usage in the artificial picture.

The above described method step e. may comprise calculating a light layer as a difference of the rendered 3D person model (without apparel product) based on the illumination condition data and the rendered 3D person model (with apparel product) based on the illumination condition data, wherein parts thereof that are covered by the 3D apparel model, are set to invisible.

The difference of the two images may represent the light transport from the 3D apparel model to the 3D person model, and thus to the photo of the person.

Assume, for example, that the 3D apparel model is wearing a pair of glasses. The frame of the glasses may cause a shadow on the side of the face of the 3D person model when illuminated from said side. To calculate the light layer, the 3D person model may be rendered without wearing the glasses, and therefore without the shadow. Afterwards, the 3D person model may be rendered again, wearing the glasses, and thus including the shadow on the side of the face. However, the glasses may be set to invisible during rendering. Therefore, only the rendered 3D person model with the shadow of the frame of the glasses may be shown. When calculating the difference of these two renderings, only the shadow may remain. Thus, only the shadow may be stored in the light layer.

Setting to invisible may comprise omitting, by a renderer, pixels not belonging to the 3D apparel model, and/or removing said pixels during post-production.

Generating the artificial picture may further comprise layering of the photo, the light layer, and the rendered 3D apparel model.

Instead of rendering the complex 3D scene, comprising the 3D person model and the 3D apparel model, both under consideration of the illumination condition data, only a layering of the above generated parts may be required to achieve an artificial picture of good quality. Particularly, the light layer may be layered over the photo of the person. Thus, the light transport from the worn apparel to the person may be represented in the artificial picture. Then, the rendered 3D apparel model may be layered over the combination of the light layer and the photo of the person. As a result, an artificial picture of the person, "virtually" wearing the selected apparel, may be achieved.

Considering the 3D person model of step e. may comprise applying the 3D apparel model to the 3D person model and/or applying light transport from the 3D person model to the 3D apparel model.

Applying the 3D apparel model to the 3D person model may further comprise applying geometrical properties of the 3D person model to the 3D apparel model and/or applying the light transport from the 3D person model to the 3D apparel model.

Applying the geometrical properties to the 3D apparel model may allow a simulation of, e.g., the wrinkling of the fabric of the apparel, which may be a further factor for providing an artificial picture of good quality, because any unnatural behavior of the fabric, e.g. unnatural protruding or an unnatural stiffness and the like, might negatively impact the quality of the artificial picture.

Furthermore, the light transport from the 3D person model to the rendered 3D apparel model may be considered in order to improve the quality of the artificial picture. Thus, when for example, an arm or a hand of the 3D person model causes a shadow on the 3D apparel model, this shadow may also required to be visible on the rendered 3D apparel to maintain the quality of the artificial picture.

Considering the illumination condition data of step e. comprises **applying the** illumination condition data to the 3D apparel model and to the 3D person model.

The illumination condition data like global environmental light sources, global environmental shadows, global environmental reflections, or any other object that may impact the light transport from the environment to the 3D models may have to be represented correctly in the renderings to achieve a good quality of the artificial picture.

The step of providing a 3D person model may further comprise at least one of the following steps:
- providing the 3D person model by means of a 3D scanner,
- providing the 3D person model by means of a depth sensor, or
- providing the 3D person model by means of photogrammetry.

In order to provide a 3D person model, a 3D scanner may be used to detect the body shape of the person. Additionally or alternatively, a depth sensor, like a Microsoft Kinect^{™} controller may be used. For example, by means of an algorithm, which may be based on predefined shapes of body parts, the body shape of the scanned person may be reconstructed. As a further alternative, photogrammetry may be used. By way of taking several pictures from several directions, the 3D model may be approximated. This technique may simultaneously provide the photo of the person which may be used for substituting the 3D person model in the artificial picture.

The 3D person model may comprise a silhouette and the photo may also comprise a silhouette of the person. The method may further comprise the step of bringing the silhouettes in conformity, if the silhouettes deviate from each other.

Depending on the techniques used for providing the 3D person model, it may be necessary to adjust the silhouettes such that they are in accordance with each other. Without the silhouettes being in accordance, the quality of the artificial picture may significantly suffer, since for example the calculations of the light layer may comprise some errors. When using photogrammetry, both silhouettes may automatically be in accordance since the photo of the person and the 3D person model may be generated in essentially the same point in time. Some minor tolerances in the timing may be acceptable when preventing unfavorable deviations of the silhouettes. However, when using a Microsoft Kinect^{™} controller or a 3D scanner, the generation of the 3D person model may require several seconds. During this time, the person may have slightly moved or may be in another breath cycle when the photo of the person is taken. Then, it may be necessary to adjust the silhouettes.

The step of bringing the silhouettes in conformity may further comprise extracting the silhouette of the person of the photo, warping the 3D person model such that the silhouette of the 3D person model matches the silhouette extracted from the photo and/or warping the photo such that it matches the silhouette of the 3D person model.

To provide further flexibility, either the silhouette of the 3D person model may be warped such that it may be in accordance with the silhouette of the person of the photo, or vice versa.

Warping may comprise deforming one or both of the two silhouettes.

Such deformations may be realized by algorithms, e.g., configured to move the "edges" or "borders" of the silhouette until they are in accordance to each other. Warping may further comprise applying a physical simulation to avoid unnatural deformations.

Since an automated adjustment of the silhouettes may lead to unnatural deformations of either or both of the person of the photo or the 3D person model, physical simulations may be applied as a control measure. The deformations for warping may in particular unnaturally increase or decrease the size of certain parts of the body or the complete body which may negatively impact the quality of the artificial picture. Therefore, when generally considering properties of the human body (e.g., ratio of size of the hand to size of an arm) by a physical simulation, such unnatural deformations may be prevented.

The step of providing illumination condition data is based on data gathered by an ambient sensor, preferably at essentially the same point in time when the photo of the person is taken. The ambient sensor may comprise one of a spherical imaging system or a mirror ball.

Using a spherical image system, e.g., a spherical camera system, as an ambient sensor may significantly simplify providing the illumination condition data. Such an image system may capture a 360° panorama view that surrounds the person during generation of the corresponding 3D person model and/or the photo of the person. As a result, relevant light sources and objects and the like that surround the set may be captured and stored in a panorama image. Note that it is for example also possible to capture only a part or parts of the 360° panorama view, e.g. 180° or any other suitable amount of degree. Similar results may be achieved if a mirror ball is used.

Providing the illumination condition data essentially at the same point in time may ensure that the illumination conditions are not only in accordance with the photo, but also with the 3D person model that may be generated at the point in time when the photo of the person is taken. Thus, all three components - the photo of the person, the illumination condition data, and the 3D person model - may be in accordance with each other. Therefore, providing the illumination condition data at the point in time when the photo is taken may allow using said data later-on for rendering the selected piece of apparel. Particularly, when rendering a 3D model of the selected piece of apparel and at the same time considering the illumination condition data as well as the 3D model of the person may enable the method to adjust the rendered 3D apparel model to the body proportions of the model and to the same illumination conditions while the photo of the person has been taken.

In detail, considering the illumination condition data may enable an essentially seamless integration of the rendered, illuminated 3D apparel model into the photo of the person which may significantly improve the quality of the artificial picture.

The term "essentially at the same time" means at the same point in time, but including typical time tolerances that are inevitable in the addressed field of technology.

The illumination condition data may comprise an environment map. The environment map may comprise a simulated 3D model of a set in which the photo has been taken.

The above described panorama view, e.g., stored in terms of a digital photo, may be used as an environmental map. In more detail, the digital image may be used to surround the 3D apparel model and/or the 3D person model. Then, the light transport from the environmental map to the 3D models may be calculated. Alternatively, a modelled 3D scene that represents the set in which the photo of the person has been taken may be used, at least in part, as the environmental **map.**

Applying the illumination condition data may comprise considering light transport from the environment map to the 3D person model and to the 3D apparel model.

As already discussed above, the environmental map may be used to calculate the light transport from the environmental map to the 3D models to achieve the artificial picture of good quality.

The 3D person model comprises textures. Furthermore, the textures are based on one or more photos of the person taken by one or more cameras.

To use a textured 3D model of the person may further improve the quality of the renderings as described above, and therefore also of the artificial picture. This is because a textured 3D person model may allow a more accurate calculation of the light transport from said model to the 3D apparel model. The more accurate the calculation, the better may be the results of the artificial picture regarding its quality. For example, when a piece of apparel comprises reflecting parts like small mirrors and the like, in which the 3D person model is (at least in part) visible, the rendering results of the 3D apparel model may be improved since an accurate reflection of the surface of the 3D person model may be calculated.

The method may comprise the step of storing parameters of the one or more cameras, wherein the parameters may comprise at least one of the position of the camera, the orientation, and the focal length. Furthermore, the parameters may be suitable to calculate a reference point of view wherein step e. (defined above) may consider the reference point of view.

Storing the above listed parameters may allow an automated layering of the light layer and the rendered 3D apparel model over the photo of the person such that the resulting artificial picture may look as if the person is wearing the rendered apparel. In more detail, when said parameters are known and passed to a renderer, the resulting rendered image of the 3D apparel model and the calculated light layer may fit on top of the photo of the person, such that it seems as if the person is wearing the apparel. This is, since the renderer may position its virtual camera at the position corresponding to the camera used for taking the photo of the person. In addition, when considering the focal length and the orientation, the view of the renderer's camera may be even more in accordance with the camera used for taking the photo of the person. As a result, all rendered images (or parts of them) may be rendered from the same or a similar perspective as the photo of the person that has been taken. Therefore, no further (e.g., manual) adjustment of the images may be necessary for layering the rendering results over the photo of the person. This leads to a significant simplification of the described method. The photo and the 3D person model may show the person in the same pose. Having the same pose further simplifies the layering of the rendering over the photo of the person which may avoid any further adjustment. Any adjustment may bear the risk to negatively impact the quality since adjustments may lead to any unnatural deformations and other deficiencies.

A further aspect of the present invention relates to an apparatus for generating an artificial picture of a person wearing a selectable piece of apparel, the apparatus comprising (a) means for providing a 3D person model of at least a part of the person, wherein the 3D person model comprises textures based on one or more photos of the person, (b) means for providing a photo of the person corresponding to the 3D person model, (c) means for providing illumination condition data relating to the photo based on data gathered by an ambient sensor at essentially the same point in time when the photo of the person is taken, (d) means for selecting the piece of apparel, and (e) means for generating the artificial picture as a combination of the photo and a rendered 3D apparel model of the selected piece of apparel, wherein rendering the 3D apparel model considers the illumination condition data and the 3D person model, wherein considering the illumination condition data comprises applying the illumination condition data to the 3D apparel model and to the 3D person model.

Such an apparatus may simplify performing a method according to one of the above described methods. For example, such an apparatus may replace a photo studio. Furthermore, the apparatus may be designed in a way such that it can be controlled by just one single person. Moreover, such an apparatus may be controlled by the person from which a photo shall be taken and from which a 3D model shall be created.

The means of the apparatus for providing a 3D person model of at least a part of the person may comprise at least one of a 3D scanner, a depth sensor, and/or a plurality of photogrammetry cameras.

The means of the apparatus for providing a photo of the person corresponding to the 3D person model may comprise a camera.

The camera of the means for providing a photo of the person may be one of the photogrammetry cameras.

The means of the apparatus for providing illumination condition data relating to the photo comprise an ambient sensor, wherein the ambient sensor may comprise at least one of a spherical imaging system, or a mirror ball.

The means of the apparatus for selecting the piece of apparel may comprise at least one or more of a user interface, a database, and/or a file.

Such an interface allows an easy selection of the piece of apparel, wherein the apparel may be stored in a database and/or a file. Moreover, more than one apparel may be selected from the database and/or from a file. Therefore, more than one piece of apparel may be processed by method step e. at the same time. As a result, the artificial picture may show a person wearing more than one piece of apparel at once.

The means of the apparatus for generating the artificial picture may be configured to generate an artificial picture of a person wearing a selectable piece of apparel according to the above described methods.

A further aspect of the present invention relates to a computer program that may comprise instructions for performing any of the above described methods.

A further aspect of the present invention relates to an artificial picture of a person wearing a selectable piece of apparel, generated according to any of the above described methods.

### Short Description of the Drawings

In the following, embodiments of the present invention are explained in detail with respect to the figures, in which:
Fig. 1 shows a process for generating an artificial picture of a person wearing one or more selectable pieces of apparel according to some embodiments of the present invention;
Fig. 2 shows a 3D model of a person according to some embodiments of the present invention;
Fig. 3 shows a person and cameras, arranged to form an example camera setup according to some embodiments of the present invention;
Fig. 4 shows a person and a 3D scanner according to some embodiments of the present invention;
Fig. 5 shows a person and a depth sensor according to some embodiments of the present invention;
Fig. 6 shows a photo of a person according to some embodiments of the present invention;
Fig. 7 shows a 3D apparel model according to some embodiments of the present invention;

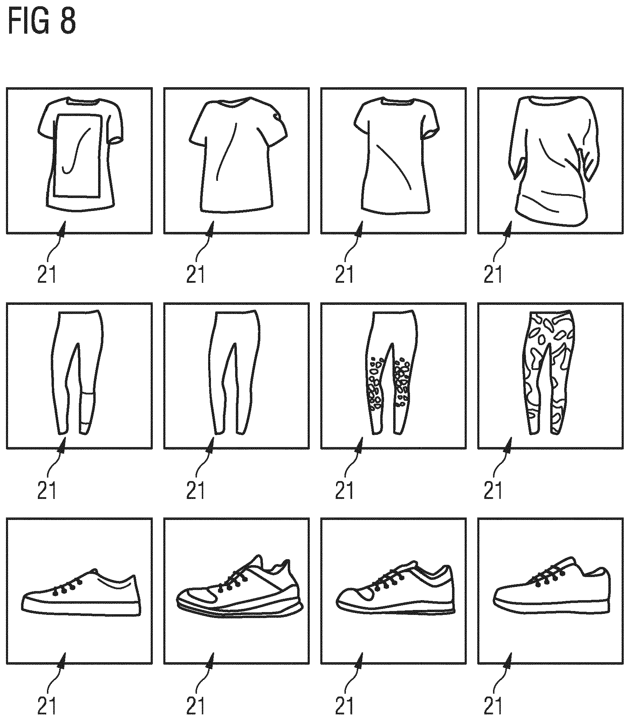

Fig. 8 shows rendered 3D apparel models according to some embodiments of the present invention;
Fig. 9 shows a rendered 3D person model, a rendered 3D person model, wherein exemplary parts that are covered by an apparel are set to invisible, and a light layer according to some embodiments of the present invention;
Fig. 10 shows a photo of a person, a light layer, a rendered 3D apparel model, an artificial picture, an artificial picture of a person wearing a 3D apparel model without a light layer, and an artificial picture of a person wearing a 3D apparel model including a light layer according to some embodiments of the present invention;
Fig. 11 shows a rendered 3D model and its silhouette as well as the silhouette of a person of a photo according to some embodiments of the present invention.

### Detailed Description of Embodiments

In the following, embodiments and variations of the present invention are described in detail with respect to the figures.

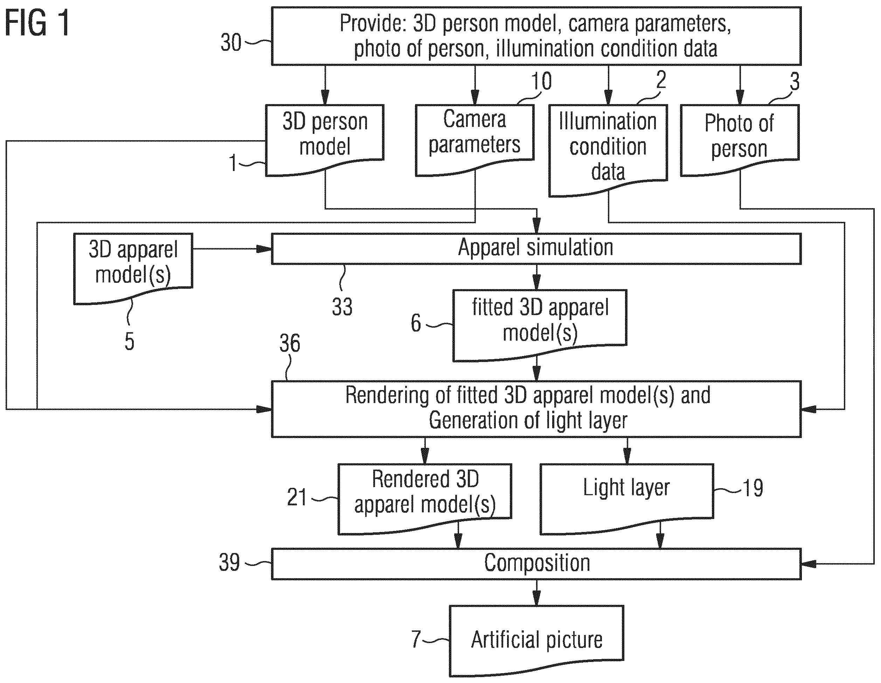

Fig. 1 shows a process 40 according to some embodiments of the present invention. It is to be understood that process 40 may comprise any or all of the process steps 30, 33, 36, and 39. However, the process steps 30, 33, 36, and 39 may be reordered, some of the process steps 30, 33, 36, and 39 may be merged or omitted. In addition, further process steps (not shown) may be integrated into process 40 or in the single process steps 30, 33, 36, and 39.

The process 40 is intended to generate an artificial picture 7 according to some embodiments of the present invention. The artificial picture 7 may be composed of several layers, wherein the layers may comprise a photo of a person 3, a light layer 19, and one or more rendered 3D apparel models 21. The artificial picture 7 may be of photorealistic nature. The terms "photorealistic nature", "photorealism", "realistic" etc. with respect to the artificial picture 7 may be understood as providing an impression like a real photo. However, specific tolerances may be acceptable. For example, tolerances may be acceptable as long as a human viewer of the artificial picture 7 may have the impression that he looks at a real photo, e.g., taken by means of a camera, while some components are indeed not realistic. In more detail, the above given terms are herein to be understood as giving the impression to a human viewer to look at a "real" photo, while at the same time (e.g., recognizable by a detailed examination of the artificial picture) some parts of the artificial picture 7 may look like to be synthetically constructed and therefore may not be an exact representation of reality.

For example, in some instances, the tracing of light rays that may be reflected by 3D models to be rendered, may be limited to a certain number of reflections. Such a limitation, e.g., controlled within a rendering software (also called "renderer"), may significantly optimize (e.g., reduce) computational time for rendering the 3D apparel model 5, with the effect that some parts of the rendering may not look like exactly representing reality. However, a viewer may not be able to distinguish between rendered 3D models with and without a limited number of ray reflections. Thus, the viewer may still have a photorealistic impression when looking at such a rendering.

To achieve such a photorealistic impression, several aspects, explained in the following with respect to process 40, may have to be considered when generating an artificial picture 7 according to some embodiments of the present invention.

The process 40 may comprise process step 30 of providing a 3D person model 1, camera parameters 10, illumination condition data 2, and/or a photo of a person 3.

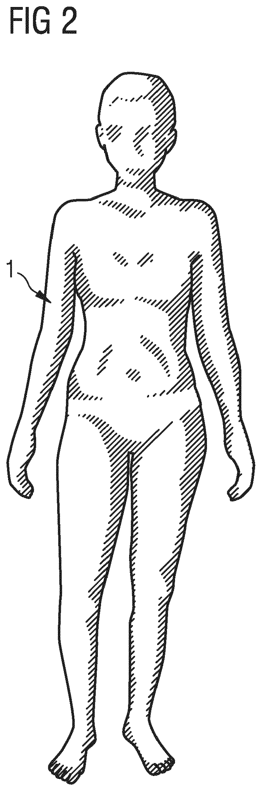

An exemplary 3D person model 1 according to some embodiments of the present invention is shown in Fig. 2. The 3D person model 1 may be provided in process 30 of Fig. 1. The 3D person model 1 may be a 3D representation of a human person 11. The 3D person model 1 may be a detailed representation of the shape of the body of the corresponding person 11, on which the 3D person model 1 is based on. The 3D person model 1 may, for example, comprise a specific amount of points which are connected to each other and thus may form polygons. However, the detail degree may vary. Therefore, the 3D person model 1 may comprise a number of polygons. Commonly, the detail degree may be increased when more polygons are used to form the 3D person model 1. 3D models are generally known by the person skilled in the art, e.g., from so called 3D modelling software, like CAD software and the like. The 3D person model 1 comprises textures instead of a synthetic surface (without textures, as shown in Fig. 1), e.g., comprising a single-colored surface.

Note that the 3D person model 1 is not limited to shapes of human bodies. Moreover, 3D models of, for example, animals and objects are suitable to comply with some embodiments of the present invention.

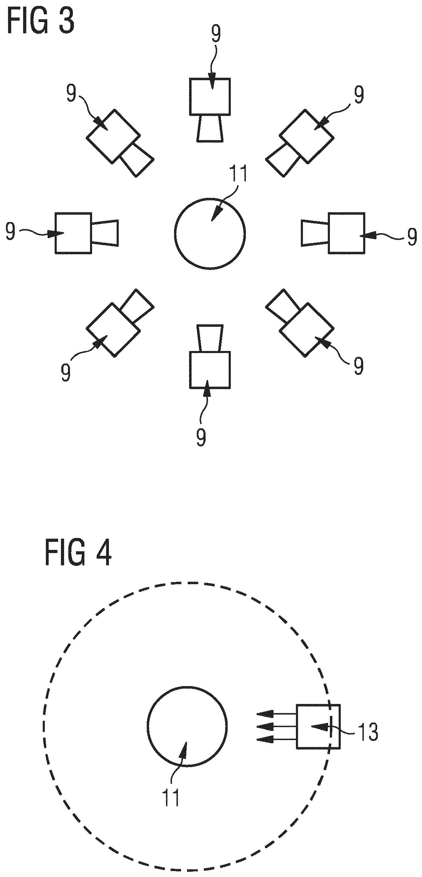

The 3D person model 1 may be generated by photogrammetry cameras 9, exemplarily shown in Fig. 3 according to some embodiments of the present invention. The photogrammetry cameras 9 may surround the person 11. All cameras 9 take a picture of the person 11 at the same point in time, wherein the term "same point in time" is to be understood such that tolerances are permitted, as already defined above. The tolerances are to be seen in a range as it commonly occurs when several cameras are triggered at the same time, e.g. resulting from signal runtime of the trigger signal and the like.

Afterwards, for example, the 3D person model 1 may be constructed based on the taken pictures using, e.g., photogrammetry algorithms. In more detail, photogrammetry is a technique for making measurements from photographs for, *inter alia,* recovering the exact positions of surface points. Thus, this technique may be used to reconstruct the surface points of the person 11 to construct a corresponding 3D person model 1.

Additionally or alternatively, the 3D person model 1 may be generated by a 3D scanner 13 according to some embodiments of the present invention as shown in Fig. 4. A 3D scanner 13 may scan the shape of the body of a person 11 and may store the results of scanned surface points in terms of a 3D person model 1.

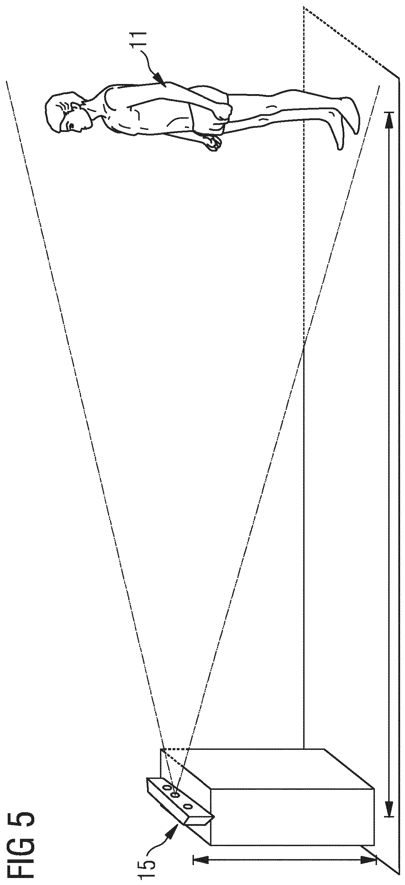

Additionally or alternatively, the 3D person model 1 may be generated by a depth sensor 15 according to some embodiments of the present invention as shown in Fig. 5. A depth sensor 15 may, for example, be a Microsoft Kinect^{™} controller. Such a controller may project an irregular pattern of points within the infrared spectrum into a "scene". The corresponding reflections may then be tracked by an infrared camera of the controller. By considering the distortion of the pattern, the depth (the distance to the infrared camera) of the single points may then be calculated. To construct a 3D person model 1 of said points, a deformation is applied to one or more available standard models.

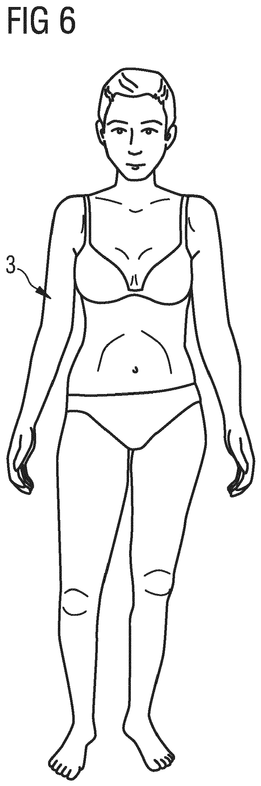

An exemplary photo of a person 3 according to some embodiments of the present invention is shown Fig. 6. The person 11 may be the same person 11 as used for generating the above described 3D person model 1. The photo of the person 3 may be taken by means of a camera 9, e.g., a digital camera, camcorder etc. The camera 9 may be for example one of the photogrammetry cameras 9 as described above with respect to Fig. 3. The resolution of the photo of the person 3 may vary. The higher the resolution, the higher the detail degree of the photo of the person 3 which may then result in a photo 3 of better quality. The photo 3 may be taken such that the photo of the person 3 shows the person 11 in a pose according to the 3D person model 1. However, deviations may be acceptable since they might be corrected and/or adjusted afterwards (described further below). The camera 9 utilized to take the photo of the person 3 may comprise camera parameters 10 like position, orientation, and/or focal length. The camera parameters 10 may be stored or saved such that they can be reused in one of the other process steps 33, 36, and/or 39.

Note that the photo of the person 3 is not limited to human persons 11. Moreover, photos of, for example, animals and objects are suitable to comply with some embodiments of the present invention.

The photo of the person 3 may be taken when specific illumination conditions prevail. For example, the person 11 shown in the photo 3 may be illuminated from a specific angle, from specific direction, and/or from a specific height. For example, illumination elements like one or more spot lights, mirrors, and/or mirrorlike reflectors may be used to illuminate the person 11 when the photo 3 is taken. Thus, light rays may be directed to the person to create an illuminated "scene". Such an illumination may be known from photo studios, wherein one or more of the above described illumination elements may be used to illuminate a "scene", e.g., comprising the person 11, from which the photo 3 may then be taken.

The illumination condition data to be provided may be detected by an ambient sensor like a spherical image system and/or a mirror ball. For example, a spherical image system may be based on a camera which may be able to create 360° panorama picture of the environment that surrounds the person 11 during generation of the corresponding 3D person model 1. As a result, relevant light sources and objects and the like that surround the set may be captured and stored in a panorama image. Note that it is for example also possible to capture only a part or parts of the 360° panorama view, e.g. 180° or any other suitable amount of degree. For example, a spherical image system like the Spheron^{™} SceneCam may be used. Note that similar results may be achieved if a mirror ball is used instead of a spherical image system.

Process step 33 of process 40 may perform a simulation of the 3D apparel model(s) 5. In this process step 33, the 3D apparel model(s) 5 may be simulated, e.g., by applying geometrical properties of the 3D person model 1 like height, width, abdominal girth and the like to the 3D apparel model(s) 5.

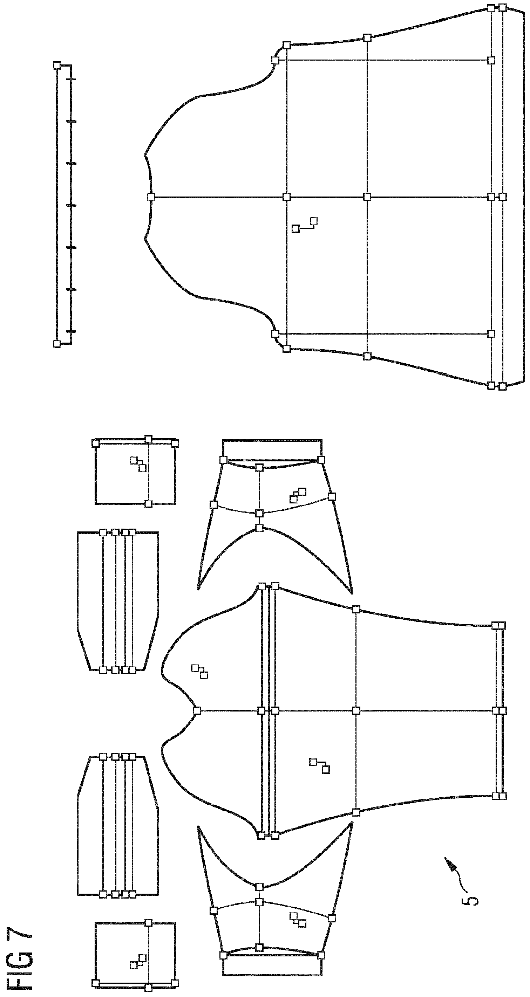

An exemplary 3D apparel CAD model 5 according to some embodiments of the present invention is shown Fig. 7. A 3D apparel model 5 may comprise, but is not limited to 3D models of t-shirts, trousers, shoes, caps, glasses, gloves, coats, masks, headgear, capes etc. In general, a 3D apparel model 5 may correspond to any kind of garment or device, e.g. glasses, prosthesis etc., wearable by a (human) person 11.

A 3D apparel model 5 may comprise polygons, lines, points etc. 3D apparel models are generally known by the person skilled in the art, e.g., from so called 3D modelling software, like CAD software and the like.

The 3D apparel model 5 may comprise textures or may comprise a single- or multicolored surface (without textures), or a combination of it. Thus, a texture may be applied later to the 3D apparel model, or the color of the surface may be adjusted. In addition, a combination of a color and a texture may be possible in order to design the surface of the 3D apparel model 5.

The 3D apparel model may also comprise information of fabrics which may be intended for manufacturing a corresponding piece of apparel.

The above mentioned apparel simulation 33 may be performed by a cloth simulation tool like V-Stitcher, Clo3D, Vidya etc. However, other software components may be involved in such a process. The simulation may adjust the 3D apparel model(s) 5 to get in accordance with the above mentioned geometrical properties of the 3D person model 1. During simulation, physical characteristics of the fabric (or a combination of fabrics) may be considered. For example, a fabric like silk wrinkles in a different way than wool and the like. Thus, the simulation may be able to calculate how to modify the 3D apparel model(s) 5 such that they get in accordance with the shape of the body provided by the 3D person model 1 under consideration of physical properties of the fabric(s), intended for manufacturing. Physical properties may comprise, but are not limited to, thickness of the fabric, stretch and bending stiffness, color(s) of the fabric, type of weaving of the fabric, overall size of the 3D apparel model 5 etc.

Note that more than one 3D apparel model 5 may be passed to the cloth simulation tool. Thus, the simulation may be applied to one or more apparel at the same time. For example, one t-shirt and one pair of trousers may be selected. Then, the cloth simulation tool may simulate both 3D apparel models 5 according to the above given description.

As a result, process step 33 may generate the fitted 3D apparel model(s) 6 that may look like being worn by a (human) person 11.

In addition or alternatively, the 3D apparel model(s) 5 may be stored in a database, eventually together with an arbitrary number of other 3D apparel models 5. In addition or alternatively, the 3D apparel model(s) 5 may be stored in a file, e.g., a computer or data file. The 3D apparel model(s) 5 may be selected from a database or a file (or from any other kind of memory) by utilizing a user interface. Such a user interface may be implemented in terms of a computer application, comprising desktop applications, web-based applications, interfaces for touch-screen applications, applications for large displays etc. In addition or alternatively, a user interface may comprise physical buttons, physical switches, physical dialers, physical rocker switches etc. The selection may be used to pass the 3D apparel model(s) 5 to a corresponding simulator according to process step 33.

Note that the 3D apparel model(s) 5 is/are not limited to garments for human persons. Moreover, for example, garments for animals or fabrics that may be applied to any kind of object are suitable to comply with some embodiments of the present invention.

Process step 36 of process 40 may perform one or more rendering steps, using a renderer and/or a 3D rendering software. During rendering, the 3D person model 1, the fitted 3D apparel model(s) 6, and the illumination condition data 2 may be considered. Process step 36 may at least serve the purpose of rendering the fitted 3D apparel model(s) 6 and to provide a light layer 19. Note that one or more light layers 19 may be provided. For example, when more than one fitted 3D apparel model 6 is rendered, the light transport from each fitted 3D apparel model 6 to the 3D person model 1 may be stored in a separate light layer 19.

Before rendering, a reference point of view may be calculated according the camera parameters 10. This reference point of view may then be used for positioning and orienting a virtual camera according to the position and orientation of the camera used for taking the photo of the person 3. Using such a reference point may allow to perform all rendering steps in a way such that the perspective of the rendering results comply with the perspective from which the photo of the person 3 has been taken. Thus, a composition (explained further below) of the renderings and the photo of the person 3 may be simplified.

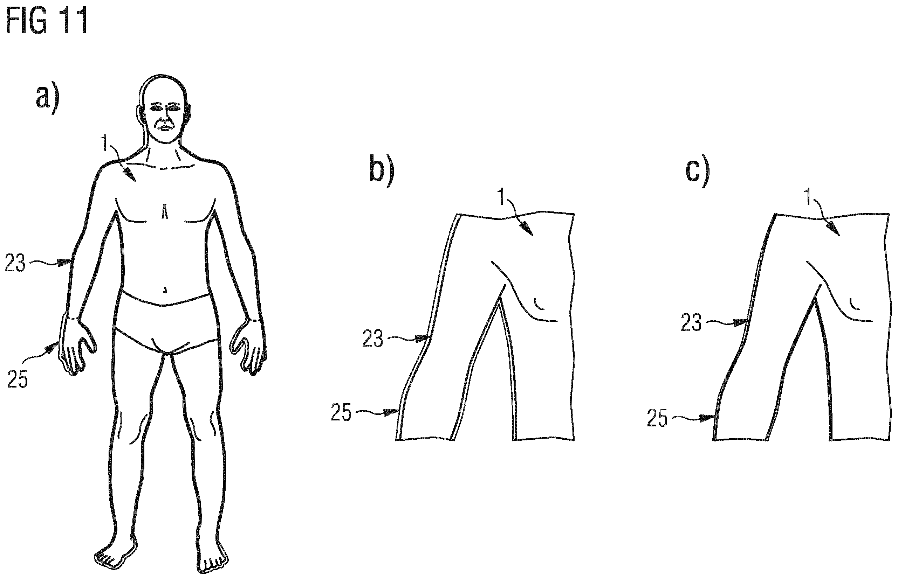

Additionally or alternatively, Fig. 11 shows a silhouette 23 of the 3D person model 1 and a silhouette 25 of the photo of the person 3 (Fig. 11 (a)). Depending, e.g., on the accuracy of the generation of the 3D person model 1 and/or the photo of the person 3, the silhouettes 23, 25 may deviate (Fig. 11 (b)). This may, for example, arise when the photo of the person 3 is not taken at the point in time when the 3D person model is generated. Such a deviation may be compensated by warping one or both of the silhouettes 23, 25 such that they are in accordance with each other after warping (Fig. 11 (c)).

In more detail, the warping may be done by deforming the silhouettes 23, 25. Such deformation may be realized by algorithms, e.g., configured to move the "edges" or "borders" of the silhouettes 23, 25 as long as they are not in accordance with each other. Edges may, for example, be detected by using the Sobel operator-based algorithm which is a well-known edge detection algorithm. In addition, warping may further comprise applying a physical simulation to avoid unnatural deformations. This may avoid that specific parts of the body, either shown in the photo of the person 3 or represented by the 3D person model 1, deform in an unnatural way. For example, when specific parts are changed in size, this may lead to an unnatural impression. In more detail, when for example, a hand is enlarged during deforming such that it notably exceeds the size of the other hand, this may lead to an unnatural deformation, as mentioned above. When applying such a physical simulation to the process of warping, such deformations may be prevented. Corresponding warping algorithms may therefore be in knowledge of properties of the human body and the like and may consider these properties during warping the silhouettes.

Rendering the fitted 3D apparel model(s) 6 may be based on the 3D person model 1 and on the illumination condition data. The 3D person model 1 and the fitted 3D apparel model(s) 6 scene may be arranged such that the 3D person model 1 virtually wears the fitted 3D apparel model(s) 6. Then, the illumination condition data 2 may be applied to both 3D models 1, 6.

Applying the illumination condition data 2 may comprise surrounding the 3D person model 1 and the fitted 3D apparel model(s) 6 by an environmental map. For example, a virtual tube may be vertically placed around the 3D models such that the 3D person model 1 and the fitted 3D apparel model(s) 6 are inside the tube. Then, the inner side of the virtual tube may be textured with the environmental map, e.g., in form of a digital photo. A camera - representing the perspective from which the 3D models may be rendered - may be placed inside the tube so that the outer side of the tube is not visible on the rendered image of the 3D models 1, 6. Texturing the inner side of the tube with the environmental map may apply the light transport from the texture to the 3D models 1, 6. Accordingly, the 3D models 1, 6 may be illuminated according the environmental map. Note that, additionally or alternatively, other techniques known from the prior art may be suitable to utilize an environmental map to illuminate 3D models 1, 6. For example, some renderers may accept an environmental map as an input parameter such that no explicit modelling - as describes with respect to the above mentioned tube - is required.

Additionally or alternatively, a 3D scene, representing the environment in which the photo of the person 3 has been taken may be provided to substitute or to complement the environmental map. In this instance, the 3D person model 1 and the fitted 3D apparel model(s) 6 - worn by the 3D person model 1 - may be placed with in 3D scene representing the environment in which the photo of the person 3 has been taken. Thus, the 3D person models 1 and the fitted 3D apparel model(s) 6 may be located in the 3D scene representing the environment. As a result, light transport from the 3D scene to the 3D models 1, 6 may be calculated.

Using a 3D scene which may have been, for example, manually modelled, avoids the usage of an ambient sensor for generating the environmental map. Thus, the setup for generating the photo of the person 3 and/or the 3D person model 1 is significantly simplified.

The fitted 3D apparel model(s) 6 may be rendered while the 3D person model 1, virtually wearing the fitted 3 apparel model(s) 6, is set to invisible. Such a rendering technique may consider the light transport from the 3D person model 1 (even it is set to invisible) to the fitted 3D apparel model(s) 6. For example, shadows caused by the 3D person model 1 (which may occur from the lighting of the environmental map) may be visible on the rendered 3D apparel model(s) 21. Also, any other light transport (like reflections etc.) from the 3D person model 1 to the fitted 3D apparel model(s) 6 may be visible on the rendered 3D apparel model(s) 21. As a result, the rendered 3D apparel model(s) 21 may be considered as a 2D image, wherein only parts of the fitted 3D apparel model(s) 6 are visible which are not covered by the 3D person model 1. Therefore, for example, the part of the back of the collar opening of a worn t-shirt may not be shown in the rendered 3D apparel model 21 since it may be covered by the neck of the 3D person model 1. Such a rendering technique may ease the composition (described further below) of the photo of the person 3 and the rendered 3D apparel model(s) 21.

However, for example, a renderer may not support rendering the fitted 3D apparel model(s) 6 while the 3D person model 1 is set to invisible. In such a case, the pixels in the image of the rendered 3D apparel model(s) 21 that do not belong to the rendered 3D apparel model(s) 21 may be masked after rendering. These pixels may, e.g., relate to the 3D person model 1 or to any other environmental pixels. Masking may be understood as to remove the pixels from the image, e.g., by means of an image processing software like Photopshop^{™} etc. during post-production or the like.

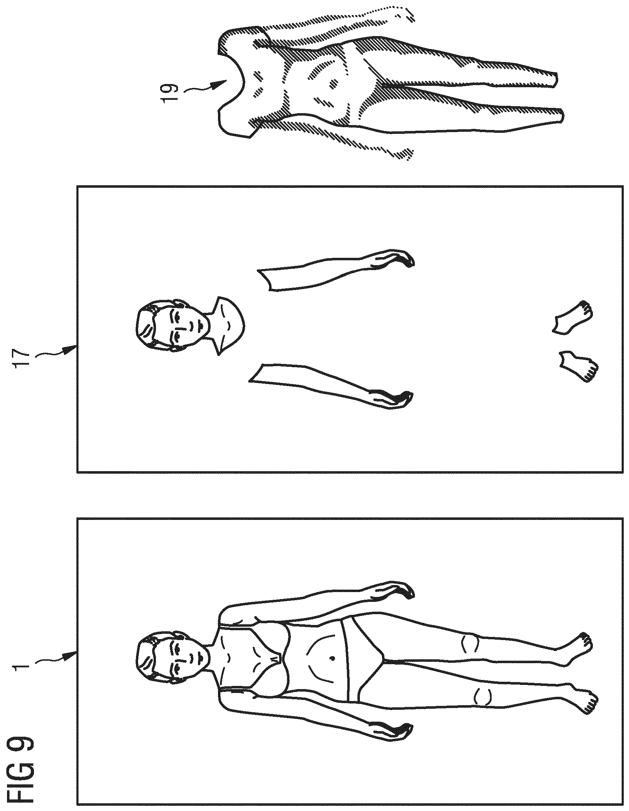

Additionally or alternatively, within process step 36, a light layer 19 is calculated and may be stored in form of a 2D image. As shown in Fig. 9 according to some embodiments of the present invention, the 3D person model 1 may be rendered without wearing the fitted 3D apparel model(s) 6. Afterwards, the 3D person model 1 may be rendered again, but this time wearing the fitted 3D apparel model(s) 6. However, parts of the 3D person model 1 that are covered by the fitted 3D apparel model(s) 6 may be set to invisible. A rendered 3D person model 1 with a worn apparel set to invisible 17 may then only show parts that are not covered by the worn fitted 3D apparel model(s) 6. Note that a corresponding renderer may still consider the light transport from the worn fitted 3D apparel model(s) 6 to the 3D person model 1. When calculating the light layer 19, the difference between the two renderings is calculated resulting in a light layer 19 that may only show the transported light (shadows, reflections) from the fitted 3D apparel model 21 to the 3D person model 1.

Note that it is also possible to render a light layer 19 for each fitted 3D apparel model 6 separately.

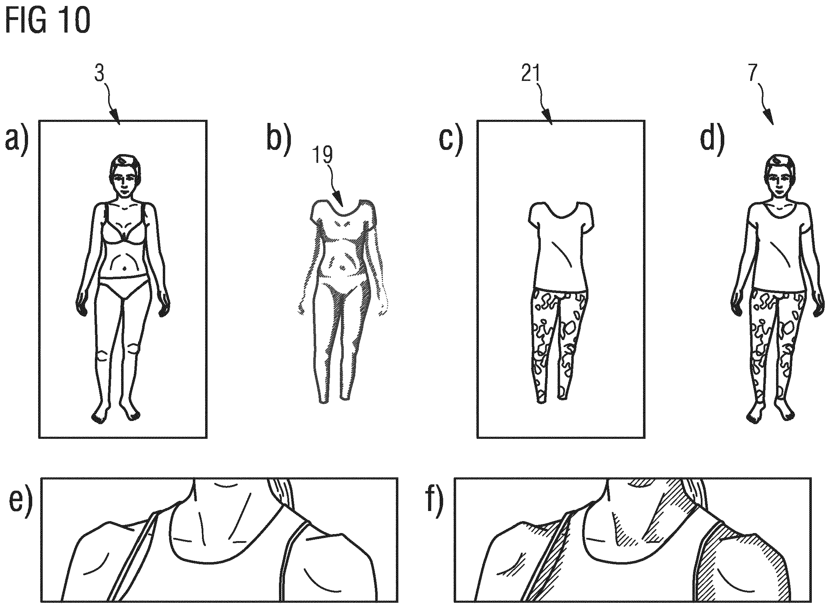

Process step 39 of process 40 may perform a composition of the photo of the person 3 (Fig. 10, (a)), the light layer 19 (Fig. 10 (b)), and rendered 3D apparel model(s) 21 (Fig. 10 (c)), wherein these components are shown in Fig. 10 according to some embodiments of the present invention. A composition may, for example, be a layering in which the photo of the person 3 is used as the background. Then, over the photo of the person 3, the light layer 19 may be layered. When more than one light layer 19 has been calculated, these light layers 19 may be layered over each other. After that, the rendered 3D apparel model(s) 21 may be layered over the combination of the photo of the person 3 and the light layer(s) 19. Such a composition may then result in the artificial picture 7 (Fig. 10 (d) and Fig. 10 (f)).

Thereafter, the artificial picture 7 may show a person 11, wearing one or more pieces of apparel. The artificial picture 7 may comprise such a quality that a human viewer may believe that the artificial picture is a photo, e.g., taken by a camera.

Therefore, artificial picture 7 may be of photorealistic nature. This may be because all components of the picture may comply in size, perspective and illumination. In particular, this may result from applying the geometrical properties of the 3D person model 1 to the 3D apparel model 6 and from performing a simulation of said 3D model. Additionally or alternatively, the photorealistic impression may arise from considering the light transport from the 3D person model 1 to the 3D apparel model(s) 6, and vice versa.

The difference between an artificial picture 7 comprising a photorealistic nature and an artificial picture 7 without a photorealistic nature is exemplarily shown in Fig. 10 (e) and Fig. 10 (f). As can be seen, Fig. 10 (e), showing a portion of an artificial picture without photorealistic nature, does not comprise any shadows or light transport from the 3D apparel model 6 to the 3D person model 1. In contrast, Fig. 10 (f), showing the same portion as presented in Fig. 10 (e), comprises shadows and light transport. As can be seen, Fig. 10 (e) does not provide a photorealistic nature, whereas Fig. 10 (f) does.

According to some embodiments of the present invention, process 40 may also be utilized in a so-called virtual dressing room. A customer who wants to try-on several apparels may generate a 3D person model and a photo 3 of himself, as described above. Then, e.g., a screen or display or the like (e.g. located in an apparel store) may display the photo 3. The customer may then select apparels, e.g., utilizing above described user interface, which may then be generated and layered over the photo according to process 40. Such a method may save time during shopping of apparels since the customer has not to personally try-on every single piece of apparel.

According to some embodiments of the present invention, process 40 may be used to realize an online apparel shopping portal. A customer may once generate a 3D person model and a photo 3 as described above, for example in a store of a corresponding apparel merchant that comprises apparatus according the present invention. The 3D person model 1 and the photo of the person 3 may then be stored such that they may be reused at any time, e.g., at home when visiting the online apparel shopping portal. Therefore, some embodiments of the present invention may allow to virtually "try-on" apparels at home when shopping apparels at online apparel shopping portals.

## Claims

1. A method for generating an artificial picture (7) of a person (11) wearing a selectable piece of apparel, the method comprising the steps of:
a. providing a 3D person model (1) of at least a part of the person (11), wherein the 3D person model (1) comprises textures based on one or more photos of the person;
b. providing a photo (3) of the person corresponding to the 3D person model (1);
c. providing illumination condition data (2) relating to the photo (3) based on data gathered by an ambient sensor at essentially the same point in time when the photo (3) of the person (11) is taken;
d. selecting the piece of apparel; and
e. generating the artificial picture (7) as a combination of the photo (3) and a rendered 3D apparel model (21) of the selected piece of apparel, wherein rendering the 3D apparel model (6) considers the illumination condition data (2) and the 3D person model (1), wherein considering the illumination condition data (2) comprises applying the illumination condition data (2) to the 3D apparel model (6) and to the 3D person model (1).

2. The method of claim 1, wherein method step e. comprises calculating a light layer (19) as a difference of:
- the rendered 3D person model (1) based on the illumination condition data (2); and
- the rendered 3D person model (1) based on the illumination condition data (2), wherein parts thereof, covered by the 3D apparel model (6), are set to invisible.

3. The method of claim 2, wherein setting to invisible comprises omitting, by a renderer, pixels not belonging to the 3D apparel model (21), and/or removing said pixels during post-production.

4. The method of claim 2 or 3, wherein step e. further comprises layering of the photo (3), the light layer (19), and the rendered 3D apparel model (21).

5. The method of one of the preceding claims, wherein considering the 3D person model (1) in step e. comprises applying the 3D apparel model (5) to the 3D person model (1) and/or applying light transport from the 3D person model (1) to the fitted 3D apparel model (6).

6. The method of claim 5, wherein applying the 3D apparel model (5) to the 3D person model (1) further comprises applying geometrical properties of the 3D person model (1) to the 3D apparel model (5).

7. The method of one of the preceding claims, wherein the 3D person model (1) comprises a silhouette and wherein the photo (3) comprises a silhouette of the person (11), the method further comprising the step of bringing the silhouettes in conformity, if the silhouettes deviate from each other.

8. The method of one of the preceding claims, wherein step a. comprises at least one of the following steps:
- providing the 3D person model (1) by means of a 3D scanner (13);
- providing the 3D person model (1) by means of a depth sensor (15); or
- providing the 3D person model (1) by means of photogrammetry.

9. The method of claim 1, wherein the ambient sensor comprises one of:
- a spherical imaging system; or
- a mirror ball.

10. The method of one of the preceding claims, wherein the illumination condition data (2) comprises an environment map.

11. The method of one of the preceding claims, wherein the photo (3) and the 3D person model (1) show the person in the same pose.

12. An apparatus for generating an artificial picture (7) of a person (11) wearing a selectable piece of apparel, the apparatus comprising:
a. means (9, 13, 15) for providing a 3D person model (1) of at least a part of the person (11), wherein the 3D person model (1) comprises textures based on one or more photos of the person;
b. means (9) for providing a photo (3) of the person (11) corresponding to the 3D person model (1);
c. means for providing illumination condition data (2) relating to the photo (3) based on data gathered by an ambient sensor at essentially the same point in time when the photo (3) of the person (11) is taken;
d. means for selecting the piece of apparel; and
e. means for generating the artificial picture (7) as a combination of the photo (3) and a rendered 3D apparel model (21) of the selected piece of apparel, wherein rendering the 3D apparel model (6) considers the illumination condition data (2) and the 3D person model (1), wherein considering the illumination condition data (2) comprises applying the illumination condition data (2) to the 3D apparel model (6) and to the 3D person model (1).

13. The apparatus of claim 12, wherein the means for generating the artificial picture (7) is configured to generate an artificial picture (7) of a person (11) wearing a selectable piece of apparel according to the method of any of the claims 1 - 11.

14. A computer program comprising instructions for performing a method according to one of the claims 1 - 11.

## Patentansprüche

1. Ein Verfahren zum Erzeugen eines künstlichen Bildes (7) einer Person (11), die ein auswählbares Kleidungsstück trägt, wobei das Verfahren die Schritte umfasst von:
a. Bereitstellen eines 3D-Personenmodells (1) von mindestens einem Teil der Person (11), wobei das 3D-Personenmodell (1) Texturen basierend auf einem oder mehreren Fotos der Person umfasst;
b. Bereitstellen eines Fotos (3) der Person, das dem 3D-Personenmodell (1) entspricht;
c. Bereitstellen von Beleuchtungsbedingungsdaten (2), die sich auf das Foto (3) beziehen, basierend auf Daten, die von einem Umgebungssensor zu im Wesentlichen dem gleichen Zeitpunkt gesammelt werden, zu dem das Foto (3) der Person (11) aufgenommen wird;
d. Auswählen des Kleidungsstücks; und
e. Erzeugen des künstlichen Bildes (7) als eine Kombination des Fotos (3) und eines gerenderten 3D-Kleidungsmodells (21) des ausgewählten Kleidungsstücks, wobei das Rendern des 3D-Kleidungsmodells (6) die Beleuchtungsbedingungsdaten (2) und das 3D-Personenmodell (1) berücksichtigt, wobei das Berücksichtigen der Beleuchtungsbedingungsdaten (2) das Anwenden der Beleuchtungsbedingungsdaten (2) auf das 3D-Kleidungsmodell (6) und auf das 3D-Personenmodell (1) umfasst.

2. Das Verfahren nach Anspruch 1, wobei der Verfahrensschritt e. das Berechnen einer Lichtschicht (19) als eine Differenz umfasst von:
- dem gerenderten 3D-Personenmodell (1) basierend auf den Beleuchtungsbedingungsdaten (2); und
- dem gerenderten 3D-Personenmodell (1) basierend auf den Beleuchtungsbedingungsdaten (2), wobei Teile davon, die von dem 3D-Kleidungsmodell (6) bedeckt sind, auf unsichtbar eingestellt werden.

3. Das Verfahren nach Anspruch 2, wobei das Einstellen auf unsichtbar das Weglassen, durch einen Renderer, von Pixeln, die nicht zu dem 3D-Kleidungsmodell (21) gehören, und/oder das Entfernen der Pixel während der Nachproduktion umfasst.

4. Das Verfahren nach Anspruch 2 oder 3, wobei Schritt e. ferner das Schichten des Fotos (3), der Lichtschicht (19) und des gerenderten 3D-Kleidungsmodells (21) umfasst.

5. Das Verfahren nach einem der vorhergehenden Ansprüche, wobei das Berücksichtigen des 3D-Personenmodells (1) in Schritt e. das Anwenden des 3D-Kleidungsmodells (5) auf das 3D-Personenmodell (1) und/oder das Anwenden des Lichttransports von dem 3D-Personenmodell (1) auf das angepasste 3D-Kleidungsmodell (6) umfasst.

6. Das Verfahren nach Anspruch 5, wobei das Anwenden des 3D-Kleidungsmodells (5) auf das 3D-Personenmodell (1) ferner das Anwenden geometrischer Eigenschaften des 3D-Personenmodells (1) auf das 3D-Kleidungsmodell (5) umfasst.

7. Das Verfahren nach einem der vorhergehenden Ansprüche, wobei das 3D-Personenmodell (1) eine Silhouette umfasst und wobei das Foto (3) eine Silhouette der Person (11) umfasst, wobei das Verfahren ferner den Schritt des in Übereinstimmung Bringens der Silhouetten umfasst, wenn die Silhouetten voneinander abweichen.

8. Das Verfahren nach einem der vorhergehenden Ansprüche, wobei Schritt a. mindestens einen der folgenden Schritte umfasst:
- Bereitstellen des 3D-Personenmodells (1) mittels eines 3D-Scanners (13);
- Bereitstellen des 3D-Personenmodells (1) mittels eines Tiefensensors (15); oder
- Bereitstellen des 3D-Personenmodells (1) mittels Photogrammetrie.

9. Das Verfahren nach Anspruch 1, wobei der Umgebungssensor eines umfasst von:
- einem sphärischen Bildgebungssystem; oder
- einer Spiegelkugel.

10. Das Verfahren nach einem der vorhergehenden Ansprüche, wobei die Beleuchtungsbedingungsdaten (2) eine Umgebungskarte umfassen.

11. Das Verfahren nach einem der vorhergehenden Ansprüche, wobei das Foto (3) und das 3D-Personenmodell (1) die Person in der gleichen Pose zeigen.

12. Eine Vorrichtung zum Erzeugen eines künstlichen Bildes (7) einer Person (11), die ein auswählbares Kleidungsstück trägt, wobei die Vorrichtung umfasst:
a. Mittel (9, 13, 15) zum Bereitstellen eines 3D-Personenmodells (1) von mindestens einem Teil der Person (11), wobei das 3D-Personenmodell (1) Texturen basierend auf einem oder mehreren Fotos der Person umfasst;
b. Mittel (9) zum Bereitstellen eines Fotos (3) der Person (11), das dem 3D-Personenmodell (1) entspricht;
c. Mittel zum Bereitstellen von Beleuchtungsbedingungsdaten (2), die sich auf das Foto (3) beziehen, basierend auf Daten, die von einem Umgebungssensor zu im Wesentlichen dem gleichen Zeitpunkt gesammelt werden, zu dem das Foto (3) der Person (11) aufgenommen wird;
d. Mittel zum Auswählen des Kleidungsstücks; und
e. Mittel zum Erzeugen des künstlichen Bildes (7) als eine Kombination des Fotos (3) und eines gerenderten 3D-Kleidungsmodells (21) des ausgewählten Kleidungsstücks, wobei das Rendern des 3D-Kleidungsmodells (6) die Beleuchtungsbedingungsdaten (2) und das 3D-Personenmodell (1) berücksichtigt, wobei das Berücksichtigen der Beleuchtungsbedingungsdaten (2) das Anwenden der Beleuchtungsbedingungsdaten (2) auf das 3D-Kleidungsmodell (6) und auf das 3D-Personenmodell (1) umfasst.

13. Die Vorrichtung nach Anspruch 12, wobei das Mittel zum Erzeugen des künstlichen Bildes (7) konfiguriert ist, um ein künstliches Bild (7) einer Person (11), die ein auswählbares Kleidungsstück trägt, gemäß dem Verfahren nach einem der Ansprüche 1-11 zu erzeugen.

14. Ein Computerprogramm, das Anweisungen zum Durchführen eines Verfahrens nach einem der Ansprüche 1-11 umfasst.

## Revendications

1. Un procédé de génération d'une image artificielle (7) d'une personne (11) portant une pièce de vêtement sélectionnable, le procédé comprenant les étapes suivantes :
a. la production d'un modèle de personne 3D (1) d'au moins une partie de la personne (11), le modèle de personne 3D (1) comprenant des textures basées sur une ou plusieurs photos de la personne ;
b. la production d'une photo (3) de la personne correspondant au modèle de personne 3D (1) ;
c. la production de données de conditions d'illumination (2) relatives à la photo (3) basées sur des données recueillies par un capteur ambiant essentiellement au même moment que celui où est prise la photo (3) de la personne (11) ;
d. la sélection de la pièce de vêtement ; et
e. la génération de l'image artificielle (7) sous forme d'une combinaison de la photo (3) et d'un modèle de vêtement 3D avec rendu (21) de la pièce de vêtement sélectionnée, le modèle de vêtement 3D avec rendu prenant en considération les données de conditions d'illumination (2) et le modèle de personne 3D (1), la prise en considération des données de conditions d'illumination (2) comprenant l'application des données de conditions d'illumination (2) au modèle de vêtement 3D (6) et au modèle de personne 3D (1).

2. Le procédé de la revendication 1, dans lequel l'étape de procédé e. comprend le calcul d'une couche d'éclairement (19) sous forme d'une différence entre :
- le modèle de personne 3D avec rendu (1) sur la base des données de conditions d'illumination (2) ; et
- le modèle de personne 3D avec rendu (1) sur la base des données de conditions d'illumination (2), dans lequel des parties de celui-ci, qui sont couvertes par le modèle de vêtement 3D (6), sont définies comme étant invisibles.

3. Le procédé de la revendication 2, dans lequel la définition comme étant invisibles comprend l'omission, par un moteur de rendu, des pixels qui n'appartiennent pas au modèle de vêtement 3D (21), et/ou le retrait desdits pixels en post-production.

4. Le procédé de la revendication 2 ou 3, dans lequel l'étape e. comprend en outre la formation de couches avec la photo (3), la couche d'éclairement (19), et le modèle de vêtement 3D avec rendu (21).

5. Le procédé de l'une des revendications précédentes, dans lequel la prise en considération du modèle de personne 3D (1) à l'étape e. comprend l'application du modèle de vêtement 3D (5) au modèle de personne 3D (1) et/ou l'application du transport de lumière du modèle de personne 3D (1) au modèle de vêtement 3D (6) ajusté.

6. Le procédé de la revendication 4, dans lequel l'application du modèle de vêtement 3D (5) au modèle de personne 3D (1) comprend en outre l'application de propriétés géométriques du modèle de personne 3D (1) au modèle de vêtement 3D (5).

7. Le procédé de l'une des revendications précédentes, dans lequel le modèle de personne 3D (1) comprend une silhouette et dans lequel la photo (3) comprend une silhouette de la personne (11), le procédé comprenant en outre l'étape de mise en conformité des silhouettes si les silhouettes diffèrent l'une de l'autre.

8. Le procédé de l'une des revendications précédentes, dans lequel l'étape a. comprend au moins l'une des étapes suivantes :
- la production du modèle de personne 3D (1) au moyen d'un scanner 3D (13) ;
- la production du modèle de personne 3D (1) au moyen d'un capteur de profondeur (15) ; ou
- la production du modèle de personne 3D (1) au moyen d'une photogrammétrie.

9. Le procédé de la revendication 1, dans lequel le capteur ambiant comprend l'un d'entre :
- un système d'imagerie sphérique ; ou
- une boule miroir.

10. Le procédé de l'une des revendications précédentes, dans lequel les données de conditions d'illumination (2) comprennent une carte de l'environnement.

11. Le procédé de l'une des revendications précédentes, dans lequel la photo (3) et le modèle de personne 3D (1) montrent la personne dans la même pose.

12. Un appareil pour la génération d'une image artificielle d'une personne (11) portant une pièce de vêtement sélectionnable, le procédé comprenant les étapes suivantes :
a. des moyens (9, 13, 15) de production d'un modèle de personne 3D (1) d'au moins une partie de la personne (11), le modèle de personne 3D (1) comprenant des textures basées sur une ou plusieurs photos de la personne ;
b. des moyens (9) de production d'une photo (3) de la personne correspondant au modèle de personne 3D (1) ;
c. des moyens de production de données de conditions d'illumination (2) relatives à la photo (3) basées sur des données recueillies par un capteur ambiant essentiellement au même moment que celui où est prise la photo (3) de la personne (11) ;
d. des moyens de sélection de la pièce de vêtement ; et
e. des moyens de génération de l'image artificielle (7) sous forme d'une combinaison de la photo (3) et d'un modèle de vêtement 3D avec rendu (21) de la pièce de vêtement sélectionnée, le modèle de vêtement 3D avec rendu prenant en considération les données de conditions d'illumination (2) et le modèle de personne 3D (1), la prise en considération des données de conditions d'illumination (2) comprenant l'application des données de conditions d'illumination (2) au modèle de vêtement 3D (6) et au modèle de personne 3D (1).

13. L'appareil de la revendication 12, dans lequel les moyens de génération de l'image artificielle (7) sont configurés pour générer une image artificielle (7) d'une personne (11) portant une pièce de vêtement sélectionnable, selon le procédé de l'une des revendications 1 à 11.

14. Un programme de calculateur comprenant des instructions pour mettre en œuvre un procédé selon l'une des revendications 1 à 11.
